# EUROPÄISCHE PATENTANMELDUNG

(11) **EP 4 427 628 A1**
(43) Veröffentlichungstag der Anmeldung: **11.09.2024**
(21) Anmeldenummer: 23160307.7
(22) Anmeldetag: 06.03.2023
(51) Int. Cl.: A45D 24/30, A46B 11/00

(54) **SÄUBERUNGSVORRICHTUNG ZUM ENTFERNEN VON ALLERGENPARTIKELN AUS HAAREN**

(71) Anmelder: Redmann UG, 10713 Berlin (DE)
(72) Erfinder: Redmann, Maximilian, 10713 Berlin (DE)
(74) Vertreter: noventive Patentanwaltsgesellschaft mbH

(57) **Zusammenfassung**

Eine Säuberungsvorrichtung (10) zum Entfernen von Allergenpartikeln aus Haaren weist eine Griffeinrichtung (12) und eine Partikelaufnahmeeinrichtung (14) auf, wobei die Partikelaufnahmeeinrichtung (14) eine Abnahmeeinrichtung (20) zum Abnehmen der Allergenpartikel aufweist.

## Beschreibung

Die Erfindung betrifft eine Säuberungsvorrichtung zum Entfernen von Allergenpartikeln, insbesondere zum Entfernen der Allergenpartikel aus menschlichen oder tierischen Haaren.

Allergenpartikel sind für Allergiker eine schwere Belastung. Insbesondere Menschen, die auf bestimmte Pollen allergisch reagieren, sind saisonal durch allergische Reaktionen infolge des Kontakts mit Allergenpartikeln, beispielsweise mit verschiedenen Blütenpollen, belastet und beeinträchtigt. Um die allergische Reaktionen und/oder deren Symptome zu lindern oder zu bekämpfen, sind verschiedene Verfahren und Arzneimittel bekannt.

Antihistaminika als Arzneistoff sind in Apotheken erhältlich und können von Fach- und Allgemeinärzten per Rezept verordnet werden. Dies wird insbesondere bei stark auftretenden Symptomen durchgeführt. Die meisten der als Antihistaminika verwendeten Wirkstoffe verstärken Müdigkeit und machen schläfrig. Darüber hinaus wirken diese Stoffe nicht gegen eine bestimmte Allergie, sondern blockieren einen Mechanismus der auftretenden Symptome, indem sie die Bindungsstellen von Histamin blockieren.

Ein weiteres bekanntes Behandlungsverfahren ist die sogenannte Hyposensibilisierung. Bei diesem Verfahren, das bei Immunglobulin E-vermittelten Typ-I-Allergien anwendbar ist, werden dem menschlichen Körper über einen Zeitraum von mehreren Jahren in unterschiedlichen Abständen Allergenextrakte zugeführt. Dies führt langfristig zu einer Gewöhnung an das jeweilige Allergen, so dass die allergische Reaktion schlussendlich ausbleibt oder wenigstens abgeschwächt wird. Dieses Verfahren ist sehr zeitaufwendig, da die behandelte Person in der Anfangszeit wöchentlich und später in monatlichen Abständen das Allergenextrakt in Form von Spritzen verabreicht bekommt. Jede dieser Behandlungen ist wiederum zeitaufwändig, da die behandelte Person nach der Verabreichung der Allergenextrakte einen gewissen Zeitraum, meistens 30 Minuten, bei dem behandelnden Arzt warten muss, da sich in dieser Zeit möglicherweise ein anaphylaktischer Schock einstellen könnte.

Zur Linderung häufig auftretender Symptome, beispielsweise Rötung und Jucken der Augen, laufende Nase oder häufiges Niesen, sowie asthmatischer Auswirkungen auf die Lunge, sind beispielsweise Augentropfen und Nasenspray bekannt. Oft wird in diesen Präparaten Cortison verwendet, so dass sie nach Möglichkeit nicht über einen langen Zeitraum oder dauerhaft eingenommen werden sollen.

Erhältlich sind darüber hinaus homöopathische Behandlungsverfahren und Produkte, zum Beispiel Akupunktur oder Schwarzkümmelöl, die ebenfalls Symptome abschwächen sollen. Wissenschaftlich ist eine Wirkung dafür allerdings nicht bewiesen.

Eine weitere Herausforderung ist, dass jede behandelte Person unterschiedlich auf Behandlungsformen und Heilmittel reagiert, so dass der Erfolg individuell sehr stark schwanken kann. Viele Personen werden von Antihistaminika schläfrig, allerdings wird auch die allergische Reaktion stark verringert. Andere Personen bleiben wach, spüren allerdings auch keinen großen Effekt der symptomatischen Behandlung.

Für Pollenallergiker ist täglich die Stärke des Pollenflugs relevant, der tagsüber meistens stärker ist als nachts. Pollenpartikel gelangen also, sofern man sich tagsüber oder auch nachts außerhalb der Wohnung aufhält, an und in den menschlichen Körper, insbesondere an die Schleimhäute, wo sie allergische Reaktionen auslösen.

Pollenallergiker mit Kopfhaaren haben insbesondere das Problem, dass die Pollenpartikel sich in ihren Haaren verfangen können und dadurch mit in die Wohnung getragen werden. Auch Kleidung, die viele Fasern aufweist, kann zu einem Polleneintrag in die Wohnung führen. Falls der Allergiker sich nicht unmittelbar nach Eintreffen zu Hause die Haare wäscht, können die Pollenpartikel in die Räume der Wohnung und auch in Mobiliar gelangen. Die allergischen Wirkstoffe der Pollenpartikel können über mehrere Monate in dem Pollenpartikel überdauern und auch nach diesem Zeitraum allergische Reaktionen auslösen.

Daher wird allgemein empfohlen, dass Pollenallergiker sich nicht in ihrem Schlafzimmer umziehen, sondern ihre Kleidung möglichst im Bad oder in Räumen, in denen sie nicht schlafen, wechseln. So wird die Menge Pollen, die insbesondere in die Schlafräume gelangt, beschränkt. So soll vermieden werden, dass insbesondere die nächtliche Ruhephase nicht von allergischen Reaktionen unterbrochen wird. Darüber hinaus wird empfohlen, unverzüglich Haare, Gesicht und Nackenpartie zu waschen, um die Pollen gründlich zu entfernen. Ein mehrfaches Auswaschen der Haare kann allerdings dazu führen, dass die Haarstruktur zerstört wird. Daher möchten Menschen ein zu häufiges Waschen der Haare weitestgehend vermeiden. Auch bei mehrmaligem Verlassen des Hauses im Tagesverlauf würde ständiges Haarewaschen sowohl die Gesundheit als auch den geregelten Tagesablauf beeinträchtigen.

Vor diesem Hintergrund hat die Erfindung die Aufgabe, eine einfach verwendbare Vorrichtung zum Entfernen von Allergenpartikeln aus Haaren bereitzustellen, die die oben genannten Nachteile vermeidet.

Die Aufgabe wird durch eine Säuberungsvorrichtung gemäß Patentanspruch 1 gelöst. Weitere vorteilhafte Ausgestaltungen sind Gegenstand der abhängigen Ansprüche.

Zur Lösung der Aufgabe wird eine Säuberungsvorrichtung zum Entfernen von Allergenpartikeln aus Haaren vorgeschlagen, die eine Griffeinrichtung und eine mit dieser verbundene Partikelaufnahmeeinrichtung aufweist, wobei die Partikelaufnahmeeinrichtung eine Abnahmeeinrichtung zum Abnehmen der Allergenpartikel von den Haaren aufweist.

Eine derartige Vorrichtung erlaubt es einem Allergiker, Pollen, die durch den Alltag in das Kopfhaar gelangen, einfach und schnell zu entfernen. Eine derartige Reinigung und Säuberung der Haare unterstützt vorbeugend die Vermeidung von allergischen Reaktionen im häuslichen Bereich und verhindert diese wenn möglich gänzlich.

Dadurch kann auch die Notwendigkeit einer weiteren Behandlung, beispielsweise mit Antihistaminika, reduziert werden.

In einigen Ausführungsformen sind die Griffeinrichtung und die Partikelaufnahmeeinrichtung miteinander lösbar verbunden.

Dadurch lässt sich die Partikelaufnahmeeinrichtung einfach austauschen, wenn sie beispielsweise nach längerer Verwendung keine weiteren Allergenpartikel mehr aufnehmen kann.

In einigen Ausführungsformen ist die Abnahmeeinrichtung an der Partikelaufnahmeeinrichtung lösbar befestigt

Je nach Ausführungsform erlaubt dies einen Austausch allein der Abnahmeeinrichtung, die die Allergenpartikel von den Haaren abnimmt. Dadurch wird umweltschonend der Materialverbrauch reduziert.

In einigen Ausführungsformen weist die Partikelaufnahmeeinrichtung eine Mehrzahl von Eingreifeinrichtungen zum Eingreifen zwischen eine Vielzahl von Haaren auf, wobei die Abnahmeeinrichtung an einer Oberfläche der Eingreifeinrichtungen angeordnet ist.

Dadurch wird eine Art Kamm gebildet, der durch die Haare geführt werden kann. Die Haare streichen dabei entlang der Oberfläche der Eingreifeinrichtungen, an der die Abnahmeeinrichtung angeordnet ist. Die Abnahmeeinrichtung nimmt dann die Pollenpartikel mit ihren Allergenen von den Haaren ab, die über sie gezogen werden. Somit kann durch einfaches Kämmen oder Bürsten der Haare eine allergische Reaktion reduziert oder vermieden werden.

In einigen Ausführungsformen ist die Abnahmeeinrichtung derart angeordnet, dass die Oberfläche der Eingreifeinrichtungen wenigstens teilweise von der Abnahmeeinrichtung bedeckt ist.

Dadurch wird die Fläche erhöht, auf der die Haare mit der Abnahmeeinrichtung in Kontakt kommen.

In einigen Ausführungsformen sind die Eingreifeinrichtungen parallel zueinander ausgerichtet.

Wird eine derart ausgestaltete Partikelaufnahmeeinrichtung durch Haare gezogen, so wird eine besonders gleichmäßige Säuberung der Haare erreicht.

In einigen Ausführungsformen sind die Eingreifeinrichtungen auf einer ersten Seite der Partikelaufnahmeeinrichtung an einem Eingreifabschnitt angeordnet, wobei die Abnahmeeinrichtung auf wenigstens eine Mehrzahl der Eingreifeinrichtungen so aufsteckbar ist, dass sie an dem Eingreifabschnitt anliegend angeordnet ist.

Eine derartige Partikelaufnahmeeinrichtung dient beispielsweise der Bildung einer Haarbürste, je nachdem, welche Form die erste Seite aufweist. Durch das Aufstecken der Abnahmeeinrichtung auf die Eingreifeinrichtungen wird eine besonders große Oberfläche der Abnahmeeinrichtung für den Kontakt mit den Haaren bereitgestellt.

In einigen Ausführungsformen sind die Eingreifeinrichtungen entlang einer Geraden aufgereiht an der Partikelaufnahmeeinrichtung angeordnet.

Eine derartige Säuberungsvorrichtung bildet beispielsweise einen Kamm. Sie lässt sich besonders platzsparend ausgestalten, so dass ein Pollenallergiker sie beispielsweise auf Reisen mitnehmen kann.

In einigen Ausführungsformen weist die Abnahmeeinrichtung eine Rückhalteschicht zum Zurückhalten von Allergenpartikeln auf.

Derartige Rückhalteschichten weisen beispielsweise eine Oberfläche auf, an der die Allergenpartikel aufgrund einer chemischen Reaktion, beispielsweise Verkleben, und/oder eines physikalischen Vorgangs, beispielsweise durch Verhaken von feinen Strukturen, hängen bleiben und so von Haaren abgenommen werden können. Vorteilhaft ist die Rückhaltewirkung der Rückhalteschicht gegenüber Allergenpartikeln stärker als gegenüber Haaren.

In einigen Ausführungsformen weist die Rückhalteschicht ein Vlies oder ein Gewebe, insbesondere aufweisend Mikrofasern auf.

Vliese, Gewebe und Mikrofasergewebe, insbesondere Mikrofaservliesgewebe sind feinporig und weisen trotzdem eine hohe Dichte auf, durch die sie ideale Filtereigenschaften aufweisen. Zusätzlich weisen viele derartige Materialien elektrostatische Eigenschaften auf, so dass sie in ihrer Umgebung ein elektrostatisches Feld erzeugen können, durch das Allergenpartikel angezogen werden.

Weitere Merkmale und Varianten der Erfindung sind aus den beigefügten Figuren ersichtlich, die Erfindungsformen der Erfindung lediglich schematisch zeigen. Es zeigen im Einzelnen:
- Fig. 1: eine Seitenansicht einer Säuberungsvorrichtung gemäß einer Ausführungsform der vorliegenden Erfindung;
- Fig. 2: eine isometrische Ansicht der Säuberungsvorrichtung aus Fig. 1;
- Fig. 3: eine Frontansicht der Säuberungsvorrichtung aus Fig. 1;
- Fig. 4: eine Seitenansicht einer Säuberungsvorrichtung gemäß einer weiteren Ausführungsform der vorliegenden Erfindung;
- Fig. 5: eine isometrische Ansicht der Säuberungsvorrichtung aus Fig. 4 und
- Fig. 6: eine Frontansicht der Säuberungsvorrichtung aus Fig. 4.

Die Figuren enthalten teilweise vereinfachte, schematische Darstellungen. Zum Teil werden für gleiche oder funktionsgleiche, aber gegebenenfalls nicht identische Elemente identische Bezugszeichen verwendet. Verschiedene Ansichten gleicher Elemente können unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

Des Weiteren schließt in der Beschreibung und den Patentansprüchen die Formulierung "wenigstens teilweise" den Begriff "vollständig" ein. Die Formulierung "ein" schließt die Formulierung "wenigstens ein" mit ein, soweit nicht explizit etwas anderes ausgeführt ist.

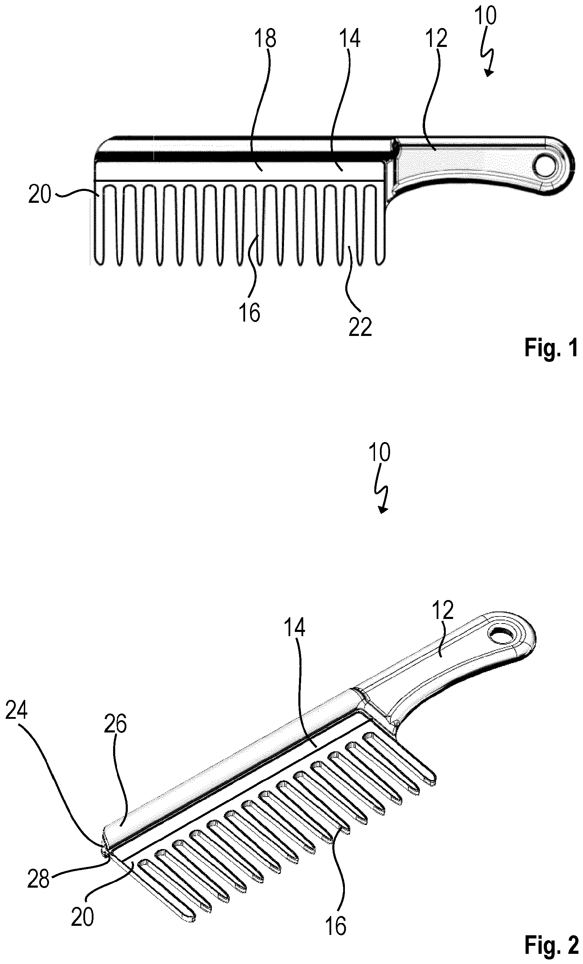

Eine in **Fig. 1** gezeigte Säuberungsvorrichtung 10 weist eine Griffeinrichtung 12 und eine Partikelaufnahmeeinrichtung 14 auf. Die Partikelaufnahmeeinrichtung 14 weist 6 Eingreifeinrichtungen 16 auf, die von einem Basisabschnitt 18 parallel zueinander abragen. Die Eingreifeinrichtungen 16 sind entlang einer Geraden aufgereiht angeordnet. Die Partikelaufnahmeeinrichtung 14 ist von einer Abnahmeeinrichtung 20 bedeckt, die eine Rückhalteschicht aus Mikrofasergewebe aufweist. Das Mikrofasergewebe hat die Eigenschaft, Allergenpartikel, beispielsweise Pollenpartikel, anzuziehen, so dass diese an der Rückhalteschicht haften oder verkleben.

Zwischen den Eingreifeinrichtungen 16 ist jeweils ein Durchführabschnitt 22 vorgesehen. Der Durchführabschnitt 22 ist so ausgestaltet, dass Haare, die durch diesen hindurchgeführt werden, möglichst großflächig mit der Abnahmeeinrichtung 20 und somit der Rückhalteschicht in Berührung kommen.

Die Säuberungsvorrichtung 10 bildet somit eine Art Kamm, mittels dessen Allergenpartikel aus Haaren entfernt werden können. Dazu wird die Säuberungsvorrichtung 10 genauso wie ein Kamm mehrfach durch die Haare geführt. So kommt die Rückhalteschicht der Abnahmeeinrichtung 20, die wenigstens einen Teil von Oberflächen der Eingreifeinrichtungen 16, beispielsweise Oberflächen der Zinken des Kammes, bedeckt, mit der Oberfläche möglichst vieler Haare in Berührung. Dabei werden die Allergenpartikel von der Rückhalteschicht der Abnahmeeinrichtung 20 von den Haaren abgenommen und in der Rückhalteschicht zurückgehalten.

Wenn die Abnahmeeinrichtung 20 eine gewisse Anzahl von Allergenpartikeln aufgenommen hat, wird ihre Effizienz reduziert. Je nachdem, welches Material für die Rückhalteschicht verwendet wird, kann die Abnahmeeinrichtung 20 dann gesäubert werden. Kann das Material nicht gesäubert werden, dann muss die Partikelaufnahmeeinrichtung 14 durch eine neue Partikelaufnahmeeinrichtung 14 ausgetauscht werden.

In einigen Ausführungsformen ist es möglich, dass die Abnahmeeinrichtung 20 beispielsweise an der Partikelaufnahmeeinrichtung 14 lösbar befestigt ist, so dass lediglich die Abnahmeeinrichtung 20 ausgetauscht werden muss.

Die Säuberungsvorrichtung 10 ist zur Entfernung von Pollenpartikeln aus menschlichen Haaren, Kunststoffhaaren und tierischen Haaren geeignet. Die Griffeinrichtung 12 dient dazu, die Säuberungsvorrichtung 10 zu halten und sie zur Entfernung von Pollenpartikeln bewegen und führen zu können.

Die Partikelaufnahmeeinrichtung 14 kann ausgewechselt werden, sobald ein in der Abnahmeeinrichtung 20 verwendetes Filtermaterial eine maximale Pollenpartikelaufnahmekapazität erreicht hat. Die Eingreifeinrichtungen 16 der Partikelaufnahmeeinrichtung 14 können Zinken, Zähne, Zacken oder Stäbchen bilden, welche durch die Haare geführt werden, um gleichzeitig möglichst viele Haare zu berühren und durch eine Kämmbewegung die den Haaren anhaftenden Pollenpartikel in das Filtermaterial der Abnahmeeinrichtung 20 zu bürsten oder zu kämmen.

Um einen Austausch der Partikelaufnahmeeinrichtung 14 zu ermöglichen, weisen die Griffeinrichtung 12 und die Partikelaufnahmeeinrichtung 14, wie in **Fig. 2** gezeigt, ineinander einsteckbare erste und zweite Befestigungsabschnitte 24, 26 auf. Der erste Befestigungsabschnitt 24 weist eine im Wesentlichen kreiszylindrische Form auf. Der zweite Befestigungsabschnitt 26 weist eine Ausnehmung auf, in die der erste Befestigungsabschnitt 24 entlang einer Achse der kreiszylindrischen Form einführbar ist. Der zweite Befestigungsabschnitt 26 der Griffeinrichtung 12 umgreift in dieser Ausführungsform also den ersten Befestigungsabschnitt 24 der Partikelaufnahmeeinrichtung 14. Darüber hinaus weist der zweite Befestigungsabschnitt 26 eine Nut 28 auf, an der die Eingreifeinrichtungen 16 durch den zweiten Befestigungsabschnitt 26 hindurchtreten können.

Zum Austausch der Partikelaufnahmeeinrichtung 14 wird die Partikelaufnahmeeinrichtung 14 entlang der Achse aus dem zweiten Befestigungsabschnitt 26 herausgezogen und im Anschluss eine neue Partikelaufnahmeeinrichtung 14 in den zweiten Befestigungsabschnitt 26 hineingeschoben.

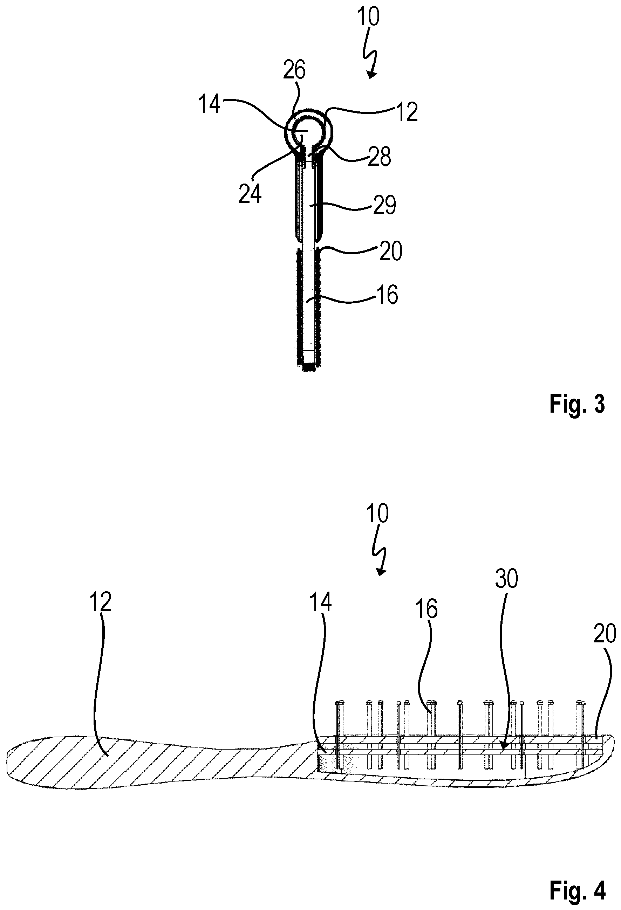

Wie in dem Schnitt in **Fig. 3** erkennbar, weist die Partikelaufnahmeeinrichtung 14 eine Grundstruktur 29 auf, die der Partikelaufnahmeeinrichtung 14 Stabilität gibt. An Oberflächen der Grundstruktur 29 ist die Abnahmeeinrichtung 20 angeordnet. Dadurch benötigt die Abnahmeeinrichtung 20 keine eigene Stabilität und kann einfacher aufgebaut werden.

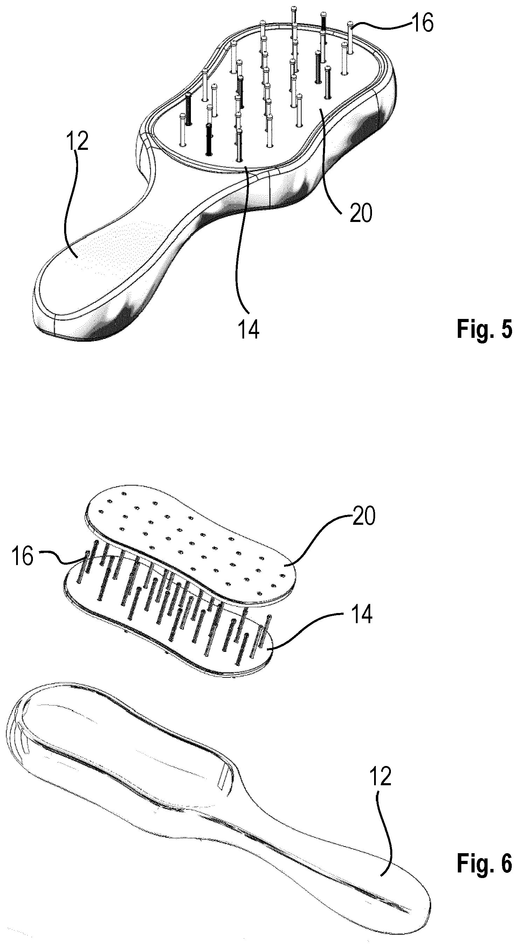

In weiteren Ausführungsformen, von denen eine in den **Fig. 4 bis 6** dargestellt ist, weist die Partikelaufnahmeeinrichtung 14 eine erste Seite 30 auf, auf der die Eingreifeinrichtungen 16 verteilt sind. In diesen Ausführungsformen bildet die Säuberungsvorrichtung 10 also eine Bürste, insbesondere eine Haarbürste. Die Abnahmeeinrichtung 20 ist so ausgestaltet, dass die Eingreifeinrichtungen 16 sie durchdringen. Zu diesem Zweck weist die Abnahmeeinrichtung 20 Öffnungen auf. Dadurch ergibt sich, dass die Abnahmeeinrichtung 20 auf die Eingreifeinrichtungen 16 aufsteckbar ist.

Die Partikelaufnahmeeinrichtung 14 kann in der Griffeinrichtung 12 lösbar befestigt sein. Zum Lösen der Partikelaufnahmeeinrichtung 14 kann beispielsweise ein Druckknopf oder eine sonstige Betätigungseinrichtung vorhanden sein.

Die Abnahmeeinrichtung 20 ist zur temporären Befestigung beispielsweise lediglich an den Eingreifeinrichtungen 16 festgeklemmt. In einigen Ausführungsformen kann beispielsweise eine einfache lösbare Verbindung, beispielsweise eine Klemm- oder Clipsverbindung zur Befestigung der Abnahmeeinrichtung 20 vorgesehen sein.

In einigen Ausführungsformen weist die Abnahmeeinrichtung 20 beispielsweise einen Mikrofaserstoff, ein Mikrofasergewebe, einen Mikrofaservliesstoff oder allgemein einen Vliesstoff oder ein Gewebe auf. Mikrofaservliesstoff ist besonders gut zur Verwendung in der Abnahmeeinrichtung 20 geeignet, da er im Mikrometerbereich viele dicht gepackte Fasern aufweist, an denen Allergenpartikel hängen bleiben können. Darüber hinaus können Mikrofaservliesstoffe so ausgestaltet werden, dass sie eine elektrostatische Aufladung aufweisen, durch welche die Allergenpartikel angezogen werden. Gesundheitsgefährdende Eigenschaften für den Menschen sind bei diesem Material nicht bekannt.

Die Erfindung ist nicht nur geeignet, menschliche Haare zuverlässig von Allergenpartikeln zu säubern, sondern auch beispielsweise Haare von Tieren nach einem Spaziergang. Dadurch kann verhindert werden, dass sich Allergenpartikel, insbesondere Pollen, in einer Wohnung ausbreiten. Somit wird die Notwendigkeit, Symptome mittels Medikamenten behandeln zu müssen, verringert. Darüber hinaus ist die Säuberungsvorrichtung 10 portabel und kompakt verstaubar, so dass sie sehr leicht an unterschiedliche Orte mitgenommen werden kann.

### Bezugszeichenliste

- 10: Säuberungsvorrichtung
- 12: Griffeinrichtung
- 14: Partikelaufnahmeeinrichtung
- 16: Eingreifeinrichtung
- 18: Basisabschnitt
- 20: Abnahmeeinrichtung
- 22: Durchführabschnitt
- 24: erster Befestigungsabschnitt
- 26: zweiter Befestigungsabschnitt
- 28: Nut
- 29: Grundstruktur
- 30: erste Seite (der Partikelaufnahmeeinrichtung 14)

## Patentansprüche

1. Säuberungsvorrichtung (10) zum Entfernen von Allergenpartikeln aus Haaren, aufweisend eine Griffeinrichtung (12) und eine Partikelaufnahmeeinrichtung (14), wobei die Partikelaufnahmeeinrichtung (14) eine Abnahmeeinrichtung (20) zum Abnehmen der Allergenpartikel aufweist.

2. Säuberungsvorrichtung gemäß Patentanspruch 1, **dadurch gekennzeichnet, dass** die Griffeinrichtung (12) und die Partikelaufnahmeeinrichtung (14) miteinander lösbar verbunden sind.

3. Säuberungsvorrichtung gemäß Patentanspruch 1 oder 2, **dadurch gekennzeichnet, dass** die Abnahmeeinrichtung (20) an der Partikelaufnahmeeinrichtung (14) lösbar befestigt ist.

4. Säuberungsvorrichtung gemäß einem der Patentansprüche 1 bis 3, **dadurch gekennzeichnet, dass** die Partikelaufnahmeeinrichtung (14) eine Mehrzahl von Eingreifeinrichtungen (16) zum Eingreifen zwischen eine Vielzahl von Haaren aufweist, wobei die Abnahmeeinrichtung (20) an einer Oberfläche der Eingreifeinrichtungen (16) angeordnet ist.

5. Säuberungsvorrichtung gemäß Patentanspruch 4, **dadurch gekennzeichnet, dass** die Abnahmeeinrichtung (20) derart angeordnet ist, dass die Oberfläche der Eingreifeinrichtungen (16) wenigstens teilweise von der Abnahmeeinrichtung (20) bedeckt ist.

6. Säuberungsvorrichtung gemäß Patentanspruch 4 oder 5, **dadurch gekennzeichnet, dass** die Eingreifeinrichtungen (16) parallel zueinander ausgerichtet sind.

7. Säuberungsvorrichtung gemäß einem der Patentansprüche 4 bis 6, **dadurch gekennzeichnet, dass** die Eingreifeinrichtungen (16) auf einer ersten Seite der Partikelaufnahmeeinrichtung (30) an einem Eingreifabschnitt angeordnet sind, wobei die Abnahmeeinrichtung (20) auf wenigstens eine Mehrzahl der Eingreifeinrichtungen (16) so aufsteckbar ist, dass sie an dem Eingreifabschnitt anliegend angeordnet ist.

8. Säuberungsvorrichtung gemäß einem der Patentansprüche 4 bis 7, **dadurch gekennzeichnet, dass** die Eingreifeinrichtungen (16) entlang einer Geraden aufgereiht an der Partikelaufnahmeeinrichtung (14) angeordnet sind.

9. Säuberungsvorrichtung gemäß einem der voranstehenden Ansprüche, **dadurch gekennzeichnet, dass** die Abnahmeeinrichtung (20) eine Rückhalteschicht zum Zurückhalten von Allergenpartikeln aufweist.

10. Säuberungsvorrichtung gemäß Patentanspruch 9, **dadurch gekennzeichnet, dass** die Rückhalteschicht ein Vlies oder ein Gewebe, insbesondere aufweisend Mikrofasern, aufweist.
